# FASCICULE DE BREVET EUROPEEN

(11) **EP 4 031 793 B1**
(45) Date de publication et mention de la délivrance du brevet: **18.12.2024**
(21) Numéro de dépôt: 20767839.2
(22) Date de dépôt: 10.09.2020
(51) Int. Cl.: F16L 55/34

(54) **ROBOT D'EXPLORATION DE CONDUIT COMPRENANT UN MODULE DE PRISE D'APPUI**
ROHREXPLORATIONSROBOTER MIT EINEM LAGERMODUL
PIPE EXPLORATION ROBOT COMPRISING A BEARING MODULE

(30) Priorité: 16.09.2019 FR 1910179
(43) Date de publication de la demande: 27.07.2022
(73) Titulaire: Autonomous Clean Water Appliance (ACWA) Robotics, 20140 Petreto-Bicchisano (FR)
(72) Inventeur: ROSSI, Jean-François, 20200 VILLE DI PIETRABUGNO (FR)
(74) Mandataire: Hautier IP
(86) Numéro de dépôt international: PCT/EP2020/075401
(87) Numéro de publication internationale: WO 2021/052869

(56) Documents cités:
- EP-A1- 0 484 701
- CN-A- 107 191 740
- CN-A- 108 223 968
- CN-U- 208 417 970
- JP-A- H0 493 188
- US-A1- 2013 104 676

## Description

### DOMAINE TECHNIQUE

La présente invention concerne le domaine des robots d'exploration de conduit. Elle trouve pour application particulièrement avantageuse le domaine des robots d'exploration de conduit mettant en oeuvre un déplacement pas à pas.

### ÉTAT DE LA TECHNIQUE

Les réseaux d'adduction d'eau sont constitués de canalisations majoritairement enterrées, formées par assemblage de sections cylindriques. Les réseaux d'adduction d'eau constituent des infrastructures à grande échelle. Par exemple, pour un pays comme la France, l'ensemble de ces réseaux avoisine le million de kilomètres linéaires. À l'échelle mondiale, on estime leur taille à 30 millions de kilomètres linéaires, et ces réseaux se développent chaque jour.

Ces réseaux sont très complexes. Ils comprennent de nombreux éléments dont des unités de captation et de traitement, des réservoirs et des retenues, des unités de relevage, des maillages et des interconnexions, ainsi que des canalisations et des raccordements.

Parmi ces éléments, les canalisations constituent, en linéaire, la majeure partie des réseaux d'adduction d'eau. Ces canalisations sont très hétérogènes. En effet, sur un même territoire peuvent cohabiter des portions de réseaux neuves et d'autres âgées de jusqu'à un, voire deux siècles. Ceci peut engendrer des différences importantes entre les canalisations, notamment en termes de matériaux constitutifs, de techniques de pose, de rythme de renouvellement et de procédures d'entretien.

En outre, les conditions d'utilisation de ces canalisations peuvent être rudes. Leur pression interne est généralement comprise entre 3 et 20 bars, et la vitesse courante d'écoulement d'eau peut aller jusqu'à 2, voire 4 m/s.

Les canalisations sont par conséquent susceptibles de se dégrader. Les causes de dégradation sont nombreuses, et notamment des chocs extérieurs, par exemple lors de chantiers ou dus au passage de véhicules, des chocs liés au fonctionnement du réseau d'eau, par exemple dans les phases de coupure et de remise en eau et en cas de fortes variations de pression, une abrasion interne causée par la présence de minéraux dans l'eau transportée, une corrosion et des intrusions de végétaux.

Ces dégradations entraînent des problèmes récurrents d'approvisionnement en eau potable. Notamment, on estime à 20 à 40% la perte d'eau transportée entre le point de prélèvement et le point de livraison. Afin d'augmenter le rendement de ces canalisation, il faudrait pouvoir les inspecter, afin de détecter toute dégradation en vue d'une réparation.

Toutefois, la documentation disponible sur ces canalisations est généralement insuffisante, et notamment en milieu rural. Il faut donc en outre pouvoir les cartographier, afin d'effectuer leur maintenance.

Or, le réseau doit fonctionner de façon continue. Toutes les opérations créant une indisponibilité doivent être programmées et limitées en temps et en fréquence. Il est donc difficile de mettre en place suffisamment d'interventions humaines, qui vont perturber le fonctionnement du réseau d'adduction d'eau, pour réaliser ces opérations de cartographie et d'inspection.

Une solution est de parcourir de l'intérieur ces canalisations. Pour cela, il existe des robots d'exploration de conduit. Ainsi, ces robots visent à explorer des conduits, tels que des canalisations des réseaux d'adduction, afin de recueillir les informations pour les cartographier, voire les inspecter pour détecter une éventuelle dégradation. Cette exploration peut en outre être réalisée sans qu'il y ait de coupure de distribution par le réseau. Ces robots sont donc destinés à être exposés aux conditions d'utilisation des canalisations. Ils peuvent notamment se retrouver sous pression et devoir se déplacer avec ou contre l'écoulement de l'eau,

En outre, les diamètres courants des conduits sont variables selon leur place dans le réseau. Des diamètres nominaux de 30 mm sont généralement utilisés pour un raccordement individuel, alors que les diamètres nominaux des conduits de distribution sont généralement compris entre 150 et 500 millimètres (mm). Il est donc préférable que les robots soient configurés de façon à s'adapter à une variation de la configuration de ces conduits, afin de pouvoir explorer les réseaux d'adduction dans leur intégralité.

Il est notamment connu du document CN 107191740 A, un robot mettant en oeuvre un déplacement pas à pas et comprenant une premier bâti et un deuxième bâti, le premier et le deuxième bâti étant mobiles relativement en translation, selon l'axe longitudinal du robot. Le premier bâti et le deuxième bâti sont en outre dotés d'un module de prise d'appui. Chaque module de prise d'appui comprend des bras latéraux articulés selon une structure pantographe, actionnés par un piston par le biais d'un plateau coulissant, et terminés chacun par une plaque support applicable sur la paroi d'un conduit. Chaque bras latéral comprend une tige fixe et une tige coulissante. Le piston vient resserrer ou éloigner, selon un mouvement de translation parallèle à l'axe longitudinal du robot, la tige coulissante du bras latéral par rapport à la tige fixe. Les bras articulés sont ainsi mobiles entre une position rétractée et une position déployée.

L'utilisation de bras articulés permet de régler leur longueur en extension, de façon à engager le bâti par rapport à une paroi d'un conduit. Le premier ou le deuxième bâti peut ensuite être translaté de façon à permettre la progression du robot.

Les documents US 2013/104676 A1 et EP 0484701 A1 décrivent chacun un robot d'exploration de conduit mettant en oeuvre un déplacement pas à pas, dans lesquels le déploiement du module de prise d'appui est réalisé par un mécanisme à manivelle coulissante. Par l'intermédiaire de bielles, la rotation d'une manivelle entraine des bras en translation perpendiculairement à l'axe longitudinal du robot.

Le document CN 208417970 U décrit un robot d'exploration de conduit comprenant des modules de prise d'appui. Chaque module de prise d'appui comprend des bras articulés formés de deux tiges montées en rotation par rapport au bâti et reliées par un rouleau de liaison.

Le document JP H0493188 A décrit un robot d'exploration de conduit dont le module de prise d'appui comprend une manivelle en rotation, présentant trois bras. Chaque bras est relié par un pivot à une bielle. Lors d'une rotation de la manivelle, le déplacement de chaque bielle est guidé par un ergot coulissant dans un rail s'étendant le long de chaque bielle.

Toutefois, ces modules de prise d'appui restent perfectibles en termes d'encombrement et de solidité. Par ailleurs, l'amplitude d'extension du module d'appui et/ou la stabilité de l'appui sur la paroi du conduit restent perfectibles.

Un objet de la présente invention est donc d'améliorer le module de prise d'appui d'un robot d'exploration de conduit. Notamment un objet non limitatif de la présente invention peut être d'améliorer la compacité d'un robot d'exploration de conduit. Un autre objet non limitatif de la présente invention peut être d'améliorer la prise d'appui du robot sur la paroi d'un conduit.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, on prévoit selon l'invention un robot d'exploration de conduit selon la revendication 1. Le robot comprend un premier bâti et un deuxième bâti, le premier bâti et le deuxième bâti comprenant chacun un module de prise d'appui doté de plusieurs bras articulés, chaque bras articulé comprenant une portion d'appui applicable sur une paroi du conduit, la portion d'appui étant déplaçable par un mouvement d'un bras articulé, chaque module de prise d'appui étant configuré pour passer alternativement d'une configuration d'engagement de la portion d'appui, à une configuration de dégagement de la portion d'appui, chaque bras articulé étant plus déployé dans ladite configuration d'engagement que dans ladite configuration de dégagement, chaque module de prise d'appui étant configuré de sorte que les bras articulés sont disposés dans un plan perpendiculaire à un axe longitudinal d'au moins un parmi le premier bâti et le deuxième bâti, et de sorte que les bras articulés sont au moins en partie mobiles entre ladite configuration d'engagement et ladite configuration de dégagement, selon un mouvement de rotation, sur au moins un secteur angulaire, autour d'un axe parallèle à l'axe longitudinal de l'au moins un parmi le premier bâti et le deuxième bâti.

Ainsi, le mouvement de rotation autour de l'axe longitudinal de l'au moins un parmi le premier bâti et le deuxième bâti permet un déploiement des bras articulés dans un plan perpendiculaire à l'axe longitudinal dudit bâti, plutôt que dans un plan incluant cet axe longitudinal. Ainsi, l'encombrement associé au module de prise d'appui est réduit, au moins selon cet axe longitudinal. Une bonne compacité du robot peut être obtenue. Le robot, d'une longueur réduite, peut avantageusement être plus facilement maniable dans des conduits sinueux. De façon alternativement avantageuse, le module de prise d'appui selon ces caractéristiques permet d'augmenter la capacité du robot à embarquer des dispositifs, comprenant par exemple des capteurs, pour une même taille finale du robot.

Selon l'invention, chaque bras articulé comprend une première tige et une deuxième tige, la première tige étant configurée de façon à être articulée en rotation avec la deuxième tige, selon une direction parallèle à l'axe longitudinal de l'au moins l'un parmi le premier bâti et le deuxième bâti, par au moins un pivot distal et un pivot proximal. Ainsi, chaque bras articulé est mobile alternativement entre une position rétractée et une position déployée. En outre, le pivot proximal et le pivot distal renforcent la structure du bras articulé. Une bonne stabilité d'appui est obtenue lorsque le module de prise d'appui est dans la configuration d'engagement de la portion d'appui. La prise d'appui sur la paroi par le robot est par conséquent améliorée. En outre, le recours à deux liaisons pivots permet d'améliorer la compacité du bras articulé dans sa configuration rétractée, tout en augmentant son élongation dans sa configuration déployée.

Par aillerus, on prévoit un robot d'exploration de conduit comprenant un premier bâti et un deuxième bâti, le premier bâti et le deuxième bâti comprenant chacun un module de prise d'appui doté de plusieurs bras articulés, chaque bras articulé comprenant une portion d'appui applicable sur une paroi du conduit, la portion d'appui étant déplaçable par un mouvement d'un bras articulé, chaque module de prise d'appui étant configuré pour passer alternativement d'une configuration d'engagement de la portion d'appui, à une configuration de dégagement de la portion d'appui, chaque bras articulé étant plus déployé dans ladite configuration d'engagement que dans ladite configuration de dégagement, chaque bras articulé comprenant une première tige et une deuxième tige, une extrémité distale de la première tige étant configurée de façon à être articulée en rotation avec la une extrémité distale de la deuxième tige, selon une direction parallèle à l'axe longitudinal d'un bâti, par au moins un pivot distal, l'extrémité distale de la deuxième tige formant la portion d'appui de chaque bras articulé.

L'utilisation de bras articulés selon ces caractéristiques permet une bonne stabilité d'appui lorsque le module de prise d'appui est dans la configuration d'engagement de la portion d'appui, par rapport à des bras ne comportant qu'une tige à déployer. En outre, la portion d'appui du module de prise d'appui permet d'obtenir une surface de contact limitée avec la paroi du conduit, voire d'obtenir un contact ponctuel, lorsque le module de prise d'appui est dans la configuration d'engagement de la portion d'appui. L'effort exercé par la portion d'appui sur la paroi du conduit est ainsi concentré. Le module de prise d'appui peut en outre être moins sensible à des irrégularités de la paroi du conduit. La prise d'appui sur la paroi par le robot est par conséquent améliorée.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 représente une vue assemblée et en perspective du robot d'exploration de conduit selon un mode de réalisation de l'invention.
- La figure 2 représente une vue assemblée et en transverse à l'axe longitudinal du robot illustré en figure 1, dans une configuration d'engagement de la portion d'appui.
- La figure 3 représente une vue assemblée et en perspective d'une partie du robot illustré en figure 1, comprenant le module de prise d'appui dans une configuration de dégagement de la portion d'appui.
- La figure 4 représente une vue assemblée et en perspective d'une partie du robot illustré en figure 1, comprenant le module de prise d'appui selon un autre mode de réalisation, dans une configuration de dégagement de la portion d'appui.
- La figure 5 représente une vue assemblée et en perspective d'une partie du module de prise d'appui selon les modes de réalisation illustrés dans les figures 3 et 4.
- La figure 6 représente une vue assemblée et en transverse à l'axe longitudinal du robot, de la partie du module de prise d'appui illustrée en figure 5.
- La figure 7 représente une vue assemblée et en perspective d'un détail de la partie du module de prise d'appui illustrée en figure 5.
- La figure 8 représente une vue assemblée et selon l'axe longitudinal du robot du détail illustré en figure 7.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, une extrémité distale de la première tige peut être articulée avec une extrémité distale de la deuxième tige par le pivot distal. L'extrémité distale de la première tige et l'extrémité distale de la deuxième tige peuvent en outre former la portion d'appui de chaque bras articulé. La portion d'appui formée par les extrémités de la première tige et de la deuxième tige permet d'obtenir une surface de contact limitée avec la paroi du conduit, voire d'obtenir un contact ponctuel, lorsque le module de prise d'appui est dans la configuration d'engagement de la portion d'appui. L'effort exercé par la portion d'appui sur la paroi du conduit est ainsi concentré. Le module de prise d'appui peut en outre être moins sensible à des irrégularités de la paroi du conduit. La prise d'appui sur la paroi par le robot est ainsi encore améliorée.

La première tige et la deuxième tige comprennent chacune une portion distale et une portion proximale, la portion distale et la portion proximale sont articulées en rotation par un pivot intermédiaire, selon une direction parallèle à l'axe longitudinal de l'au moins l'un parmi le premier bâti et le deuxième bâti. Le pivot intermédiaire est situé entre le pivot distal et le pivot proximal, le long de chacune des première tige et deuxième tige. Le pivot intermédiaire permet de maximiser la compacité du bras articulé dans sa configuration rétractée, tout en maximisant son élongation dans sa configuration déployée, et de renforcer encore la structure du bras articulé.

Selon un exemple, le module de prise d'appui peut comprendre un mécanisme d'entraînement et un bloc moteur, le mécanisme d'entraînement étant configuré de façon à être entrainé par le bloc moteur, et induire le mouvement en rotation d'au moins une partie de chaque bras articulé lors du passage alternativement de ladite configuration d'engagement à ladite configuration de dégagement. L'utilisation d'un bloc moteur pour entraîner le mécanisme d'entraînement permet de réduire encore l'encombrement du module de prise d'appui, notamment par rapport à l'utilisation d'un piston. La compacité du robot peut ainsi être améliorée.

De préférence, le mécanisme d'entraînement peut être configuré de façon à être entrainé par le bloc moteur, et induire le mouvement en rotation d'au moins une partie de chaque bras articulé lors du passage alternativement de ladite configuration d'engagement à ladite configuration de dégagement, le mouvement en rotation d'au moins une partie de chaque bras articulé étant simultané entre chaque bras articulé du module de prise d'appui. Ainsi, lors du passage de la configuration de dégagement à la configuration d'engagement de la portion d'appui, la position et l'orientation dans le conduit de l'un parmi le premier bâti et le deuxième bâti sont conservées.

Selon un exemple, chaque bras articulé pouvant comprendre une première tige et une deuxième tige, la première tige pouvant être configurée de façon à être articulée en rotation avec la deuxième tige, selon une direction parallèle à l'axe longitudinal de l'au moins un parmi le premier bâti et le deuxième bâti, le mécanisme d'entraînement peut comprendre une première couronne, la première tige de chaque bras articulé pouvant être montée sur la première couronne de façon à être libre en rotation, sur au moins un secteur angulaire, relativement à la première couronne, autour d'un axe parallèle audit axe longitudinal.

La première couronne peut en outre être configurée de façon à être entraînée en rotation, dans un premier sens de rotation, lors du passage de ladite configuration de dégagement à ladite configuration de d'engagement, et dans un deuxième sens, lors du passage de ladite configuration de d'engagement à ladite configuration de dégagement, le deuxième sens de rotation étant opposé au premier sens de rotation. Ainsi, au moins une tige du bras articulé peut être entrainée en rotation, permettant le mouvement en rotation d'au moins une partie de chaque bras articulé. En outre, la couronne étant entrainée en rotation par le bloc moteur, l'encombrement du module de prise d'appui est encore réduit, notamment selon l'axe longitudinal du robot.

Selon un exemple, le mécanisme d'entraînement peut en outre comprendre un réducteur mécanique, configuré au moins de façon à induire une rotation de la première couronne.

Selon cet exemple, le bloc moteur peut comprendre un pignon, et le réducteur peut comprendre un premier engrenage coopérant d'une part avec le pignon de façon à être entrainé en rotation selon un axe de rotation parallèle à l'axe longitudinal du pignon, et d'autre part avec la première couronne.

Selon un exemple, le mécanisme d'entraînement peut en outre comprendre une deuxième couronne, la deuxième tige pouvant être montée sur la deuxième couronne de façon à être libre en rotation, sur au moins un secteur angulaire, relativement à la deuxième couronne, autour d'un axe parallèle à l'axe longitudinal de l'au moins un parmi le premier bâti et le deuxième bâti.

La deuxième couronne peut être configurée de façon à être entraînée dans le deuxième sens de rotation, lors du passage de ladite configuration de dégagement à ladite configuration de d'engagement, et dans le premier sens, lors du passage de ladite configuration d'engagement à ladite configuration de dégagement. Ainsi, la deuxième tige peut en outre être entrainée en rotation lors du passage alternativement de la configuration d'engagement à la configuration de dégagement. Le mouvement de chaque bras articulé peut ainsi être plus rapide que lorsqu'une seule tige de chaque bras articulé est mobile en rotation. En outre, la mise en contact de la portion d'appui avec la paroi du conduit est effectuée radialement. Le module de prise d'appui peut ainsi être moins sensible à des irrégularités de la paroi du conduit et mieux s'adapter à une variation des diamètres de canalisation. La prise d'appui sur la paroi par le robot est encore améliorée.

Selon un exemple, le mécanisme d'entraînement pouvant comprendre un réducteur mécanique, et le réducteur pouvant comprendre un premier engrenage coopérant d'une part avec le pignon, de façon à être entrainé en rotation selon un axe de rotation parallèle à l'axe longitudinal du pignon, et d'autre part avec la première couronne, le réducteur peut en outre comprendre un deuxième engrenage coopérant d'une part avec le premier engrenage, de façon à être entrainé en rotation selon un axe de rotation parallèle à l'axe longitudinal du pignon, et d'autre part avec la deuxième couronne. Ainsi, la deuxième couronne peut être entrainée en rotation selon un sens opposé au sens de rotation de la première couronne, par le même bloc moteur. Ceci permet d'éviter d'avoir recours à un deuxième bloc moteur pour l'entraînement de la deuxième couronne, ce qui minimise l'encombrement du module de prise d'appui. En outre, les mouvements en rotation de la première tige et de la deuxième tige peuvent ainsi être synchronisés, lors du passage alternativement de la configuration d'engagement à la configuration de dégagement.

Selon un exemple, le module de prise d'appui peut comprendre au moins un élément d'assemblage configuré pour maintenir le mécanisme d'entraînement assemblé.

Selon un exemple, le mécanisme d'entraînement comprenant une première couronne et une deuxième couronne, la première couronne et la deuxième couronne étant disposées entre une première platine et une deuxième platine, l'au moins un élément d'assemblage peut être monté sur la première platine et la deuxième platine de façon à maintenir le mécanisme d'entraînement assemblé.

Selon un exemple, l'au moins un élément d'assemblage peut comprendre un premier élément de fixation monté sur la première platine, un deuxième élément de fixation monté sur la deuxième platine, et un panneau monté sur le premier élément de fixation et le deuxième élément de fixation, le panneau étant configuré pour ne pas être directement en contact avec la première couronne et la deuxième couronne.

Selon un exemple, la première tige et la deuxième tige peuvent être respectivement articulées avec la première couronne et la deuxième couronne par un pivot de liaison selon un axe parallèle à l'axe longitudinal d'au moins un parmi le premier bâti et le deuxième bâti, de façon à permettre un mouvement de rotation, sur au moins un secteur angulaire, de la première tige et de la deuxième tige, autour de l'axe parallèle à l'axe longitudinal du robot, relativement à l'au moins un parmi le premier bâti et le deuxième bâti. Selon cet exemple, l'articulation des première tige et deuxième tige peut être mise en butée sur l'une parmi la pluralité de butées en fin de course de chaque bras articulé lors du passage de ladite configuration d'engagement à ladite configuration de dégagement.

Selon un exemple, le bloc moteur peut comprendre un moteur pas à pas ou un motoréducteur pas à pas, et une roue codeuse. La roue codeuse peut coopérer avec le moteur pas à pas ou le motoréducteur pas à pas, de façon à mesurer un degré de déploiement des bras articulés, lors du passage alternativement de la configuration de dégagement de la portion d'appui à la configuration de d'engagement de la portion d'appui. Le diamètre de la canalisation peut ainsi être mesuré par le robot en utilisant le module de prise d'appui, par le biais de la roue codeuse.

Il est précisé que dans le cadre de la présente invention, le terme « portion d'appui » désigne une portion du robot, et plus particulièrement d'un module de prise d'appui, destinée à être en appui sur la paroi d'un conduit.

L'axe longitudinal x du robot, correspond à un axe passant par les centres du premier bâti et du deuxième bâti, lorsque le premier bâti et le deuxième bâti sont alignés. Ainsi, l'axe longitudinal x peut désigner de façon équivalente l'axe longitudinal du robot et/ou l'axe longitudinal du premier bâti, et/ou l'axe longitudinal du deuxième bâti, lorsque le premier bâti et le deuxième bâti sont alignés. Lorsque le premier bâti et le deuxième bâti ne sont pas alignés, l'axe longitudinal du robot peut être divisé en deux axes longitudinaux x et x', l'axe longitudinal x étant l'axe longitudinal du premier bâti, et l'axe longitudinal x' étant l'axe longitudinal du deuxième bâti. En utilisation, l'axe longitudinal x pourra être orienté suivant une dimension longue du conduit à explorer.

Lorsque qu'un axe est « parallèle » à un autre axe ou à une direction, cet axe peut être parallèle à, ou confondu avec, l'autre axe ou à la direction considérée.

Par « pourtour intérieur » d'une couronne, on désigne son pourtour disposé en regard du centre de la couronne, et donc le pourtour le plus proche de ce centre, selon une direction radiale à la couronne. Par « pourtour extérieur » d'une couronne, on désigne son pourtour le plus éloigné du centre de la couronne, selon une direction radiale à la couronne.

Par « diamètre externe » d'un pignon ou d'un engrenage, on entend le diamètre d'un cercle incluant les extrémités des dents du pignon ou de l'engrenage.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Le robot d'exploration de conduit, selon un mode de réalisation exemplatif de l'invention, est maintenant décrit.

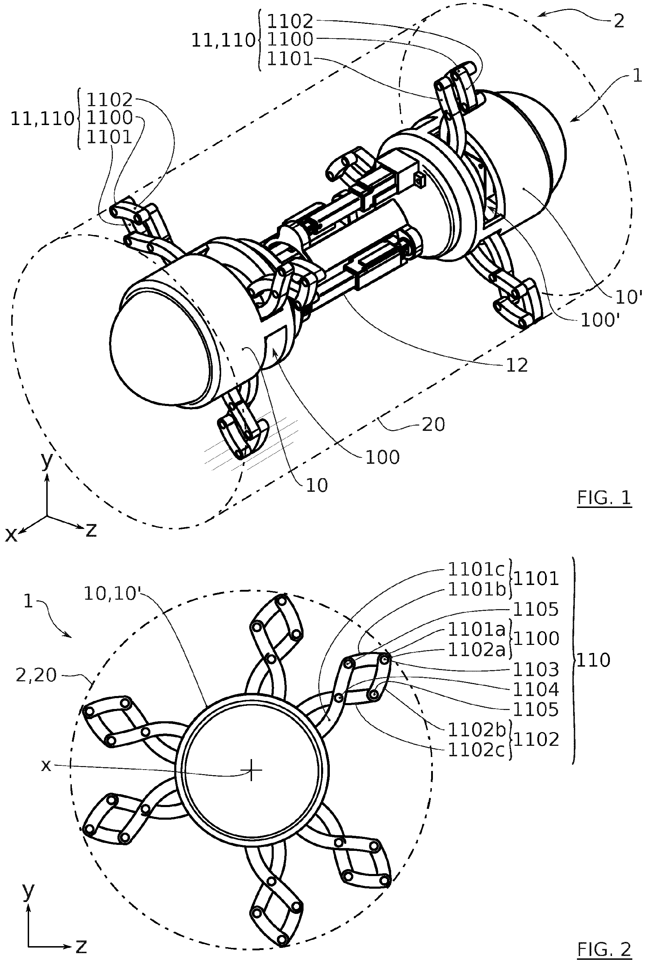

Selon ce mode de réalisation, et comme illustré par la figure 1, le robot 1 comprend un premier bâti 10 et un deuxième bâti 10'. Le premier bâti 10 et le deuxième bâti 10' comprennent chacun un module de prise d'appui 11. Le module de prise d'appui 11 est configuré pour mettre en appui au moins l'un parmi le premier bâti 10 et le deuxième bâti 10' sur une paroi 20 d'un conduit 2, par l'intermédiaire d'une portion d'appui 1100 applicable sur la paroi 20. Plus particulièrement, le module de prise d'appui 11 peut être configuré pour passer au moins l'un parmi le premier bâti 10 et le deuxième bâti 10' alternativement d'une configuration d'engagement de la portion d'appui 1100, à une configuration de dégagement de la portion d'appui 1100.

Le robot 1 peut en outre comprendre un système de positionnement 12, reliant le premier bâti 10 et le deuxième bâti 10'. Le système de positionnement peut notamment être configuré pour permettre le positionnement relatif du premier bâti 10 et du deuxième bâti 10'.

Le robot 1 peut mettre en oeuvre un déplacement de type pas à pas dont la cinématique est maintenant décrite pour une marche avant du robot 1, selon l'axe longitudinal du conduit 2. Selon ce mode de réalisation, afin de permettre la progression du robot 1 en marche avant, la cinématique de déplacement peut être décrite en deux phases principales : une phase de déploiement et une phase de rétractation.

Lors de la phase de déploiement, le module de prise d'appui 11 du deuxième bâti 10' est dans la configuration d'engagement de la portion d'appui 1100. Le deuxième bâti 10' est donc fixe par rapport au conduit 2. Le module de prise d'appui 11 du premier bâti 10 est en outre dans la configuration de dégagement de la portion d'appui 1100. Le système de positionnement 12 peut être actionné de façon à positionner le premier bâti 10 relativement au deuxième bâti 10'. Par exemple, le premier bâti 10 est éloigné du deuxième bâti 10' selon l'axe longitudinal du conduit 2, confondu avec l'axe longitudinal x du robot 1 dans la figure 1. Lorsque le premier bâti 10 est ainsi positionné, le deuxième bâti 10' étant toujours dans la configuration d'engagement de la portion d'appui 1100, le module de prise d'appui 11 du premier bâti 10 peut être passé dans la configuration d'engagement. Le premier bâti 10 est ainsi fixe par rapport au conduit 2.

Lors de la phase de rétractation, le module 11 du deuxième bâti 10' peut être passé dans la configuration de dégagement. Le système de positionnement 12 peut être actionné de façon à positionner le deuxième bâti 10' relativement au premier bâti 10. Par exemple, le deuxième bâti 10' est rapproché du premier bâti 10 selon l'axe longitudinal du conduit 2. Lorsque le deuxième bâti 10' est ainsi positionné, le premier bâti 10 étant toujours dans la configuration d'engagement de la portion d'appui 1100, le module de prise d'appui 11 du deuxième bâti 10' peut être passé dans la configuration d'engagement. Le deuxième bâti 10' est ainsi fixe par rapport au conduit 2.

Ces phases de déploiement et de rétractation peuvent se succéder afin de permettre la progression du robot. Notons que selon quel bâti parmi le premier bâti 10 et le deuxième bâti 10' est dans la configuration de dégagement au début du mouvement, le déplacement du robot 1 peut être effectué selon l'axe longitudinal du robot 1, et plus particulièrement selon l'axe longitudinal du conduit, en marche avant ou en marche arrière. Le robot 1 peut ainsi explorer un réseau de conduits, par exemple il peut revenir en arrière lorsqu'il rencontre une impasse. Le robot 1 peut en outre retourner à son point de départ, par exemple le point d'introduction du robot 1 dans le conduit 2, pour être récupéré. Ainsi, une exploration des canalisations peut être effectuée même lorsque le nombre de points d'accès à ces canalisations est limité.

Dans la suite de la description, le module de prise d'appui 11 du premier bâti 10 est décrit. Il est entendu que les caractéristiques décrites sont applicables également pour le module de prise d'appui 11 du deuxième bâti 10'. Dans la suite, on désigne comme « configuration d'engagement » la configuration d'engagement de la portion d'appui 1100, et comme « configuration de dégagement » la configuration de dégagement de la portion d'appui 1100.

Pour que le premier bâti 10 soit passé alternativement de la configuration d'engagement à la configuration de dégagement, le module de prise d'appui 11 est doté de plusieurs bras articulés 110, chaque bras articulé 110 comprenant la portion d'appui 1100. La portion d'appui 1100 peut en outre être déplacée par un mouvement d'un bras articulé 110. Dans la configuration d'engagement, chaque bras articulé 110 est plus déployé que dans la configuration de dégagement. Dans la configuration d'engagement, chaque bras articulé 110 peut être déployé de sorte que la portion d'appui 1100 soit en appui sur la paroi 20 du conduit 2.

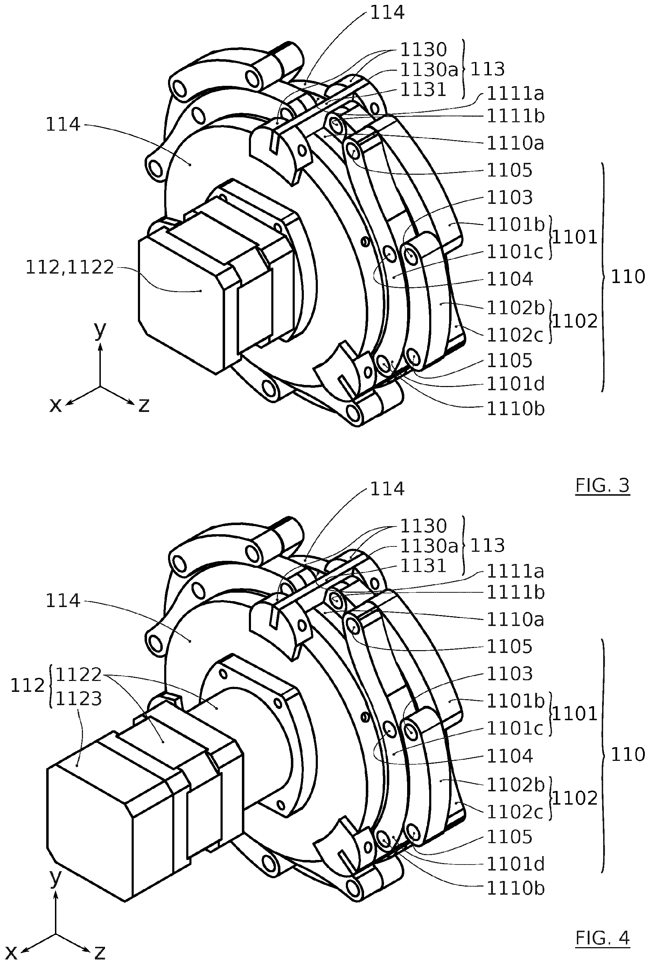

Plus particulièrement, le module de prise d'appui 11 comprend plusieurs bras articulés disposés dans un plan perpendiculaire à l'axe longitudinal x du premier bâti 10. Chaque bras articulé 110 est au moins en partie mobile entre la configuration d'engagement et la configuration de dégagement, selon un mouvement de rotation, sur au moins un secteur angulaire, autour d'un axe parallèle à l'axe longitudinal x du premier bâti 10. Chaque bras articulé 110 est ainsi déployable selon une direction principale perpendiculaire à l'axe longitudinal du premier bâti 10, entre une position rétractée, par exemple illustrée par les figures 3 et 4, et une position en moins partiellement déployée, par exemple illustrée par la figure 2, dans laquelle chaque bras articulé 110 est déployé de façon à mettre en appui la portion d'appui 1100 sur la paroi 20 du conduit 2. Selon l'exemple illustré dans les figures, chaque module de prise d'appui 11 comprend trois bras articulés disposés radialement par rapport au bâti, à équidistance les uns des autres. On verra que la mobilité des bras est avantageusement synchrone.

La structure des bras articulés est maintenant décrite en référence aux figures 2 et 3. Pour que chaque bras articulé 110 soit au moins en partie mobile, alternativement entre une position rétractée et une position au moins partiellement déployée, chaque bras articulé 110 comprend une première tige 1101 et une deuxième tige 1102. La première tige 1101 est configurée de façon à être articulée en rotation avec la deuxième tige 1102, par un pivot distal 1103 et un pivot proximal 1104. De façon générale, une articulation forme une jonction de liaison entre plusieurs éléments, permettant leur mobilité relative. Chaque pivot forme une articulation joignant les éléments qu'il articule en rotation. Le pivot distal 1103 et le pivot proximal 1104 permettent chacun la rotation relative de la première tige 1101 et de la deuxième tige 1102 autour d'un axe parallèle à l'axe longitudinal du premier bâti 10. Plus particulièrement, la première tige 1101 et la deuxième tige 1102 comprennent chacune une portion distale 1101b, 1102b et une portion proximale 1101c, 1102c La portion distale 1101b, 1102b et la portion proximale 1101c, 1102c de chacune des première tige 1101 et deuxième tige 1102, sont articulées en rotation par un pivot intermédiaire 1105, autour d'un axe parallèle à l'axe longitudinal du premier bâti 10. Le pivot intermédiaire 1105 est situé entre le pivot distal 1103 et le pivot proximal 1104, le long de chacune des première tige 1101 et deuxième tige 1102.

Comme illustré en figure 3, la première tige 1101 et la deuxième tige 1102 de chaque bras articulé 110 peuvent en outre être articulées de façon à se chevaucher, au moins lorsque le bras articulé 110 est dans sa position rétractée. Pour cela, la portion proximale 1101c de la première tige 1101 et la portion distale 1102b de la deuxième tige 1102 peuvent être disposées dans le même premier plan, et que la portion proximale 1102c de la deuxième tige 1002 et la portion distale 1101b de la première tige 1101 peuvent être disposées dans le même deuxième plan différent du premier plan. Ainsi, la compacité du bras articulé 110 est améliorée, au moins dans sa position rétractée.

Par ailleurs, chaque bras articulé 110 peut être configuré de façon à établir un contact de surface limitée, voire ponctuel, avec la paroi 20 du conduit 2. Pour cela, et comme illustré en figure 2, la portion distale 1101b de la première tige 1101 et la portion distale 1102b de la deuxième tige 1102 peuvent être articulées à leur extrémité distale 1101a, 1102a par le pivot distal 1103.

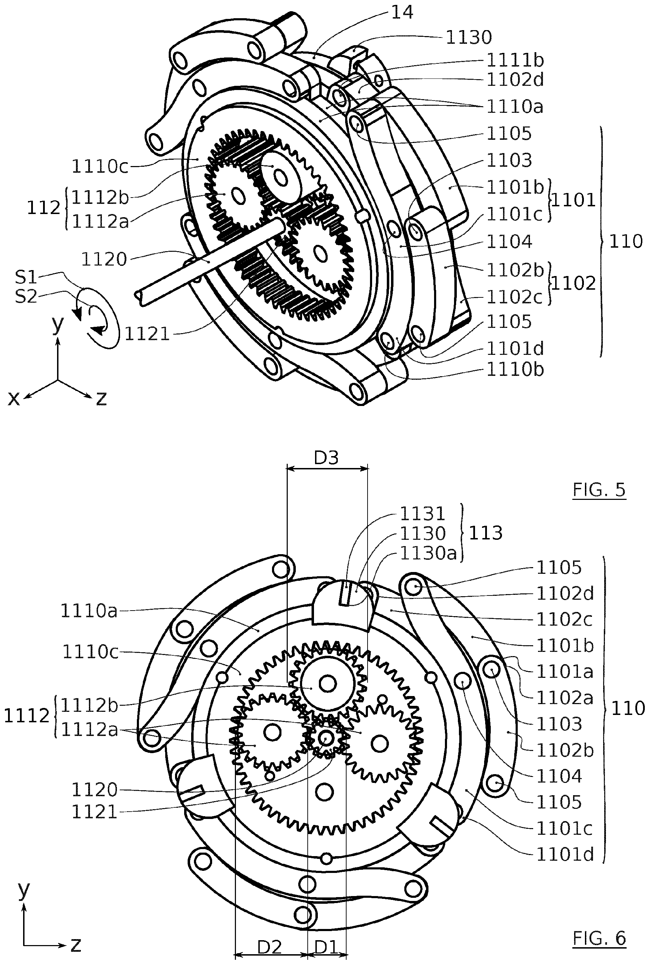

Afin de permettre le mouvement de chaque bras articulé 110 alternativement entre une position rétractée et une position au moins partiellement déployée, le module de prise d'appui 11 peut comprendre un mécanisme d'entraînement 111. Ce mécanisme d'entraînement 111 peut être entrainé par un bloc moteur 112, comprenant un moteur 1122, tel qu'illustré en figure 3, ou un motoréducteur 1122, tel qu'illustré en figure 4. Le bloc moteur 112 peut en outre comprendre un arbre de transmission 1120 propre à transmettre le mouvement de rotation du moteur ou motoréducteur 1122 au mécanisme d'entraînement 111. Comme illustré en figure 5, l'arbre de transmission 1120 peut être disposé selon l'axe longitudinal du premier bâti 10.

Comme illustré par les figures 5 à 8, le mécanisme d'entraînement 11 peut comprendre une première couronne 1110 et une deuxième couronne 1111. La première tige 1101 et la deuxième tige 1102 de chaque bras articulé 110 peuvent respectivement être montées libres en rotation sur la première couronne 1110 et la deuxième couronne 1111. La première couronne 1110 peut être configurée de façon à être entraînée en rotation, dans un premier sens de rotation S1, lors du passage de la configuration de dégagement à la configuration de d'engagement, et dans un deuxième sens S2, lors du passage de la configuration de d'engagement à la configuration de dégagement, le deuxième sens de rotation S2 étant opposé au premier sens de rotation S1, par exemple comme illustré en figure 5. La deuxième couronne peut être configurée de façon à être entraînée dans le deuxième sens de rotation S2, lors du passage de la configuration de dégagement à la configuration de d'engagement, et dans le premier sens S1, lors du passage de la configuration d'engagement à la configuration de dégagement. Du fait que la première tige 1101 et la deuxième tige 1102 de chaque bras articulé 110 peuvent respectivement être montées libres en rotation sur la première couronne 1110 et la deuxième couronne 1111, et comme la première tige 1101 peut être configurée de façon à être articulée en rotation avec la deuxième tige 1102, par un pivot distal 1103 et un pivot proximal 1104, l'on comprend que le mouvement de rotation de chacune des première couronne 1110 et deuxième couronne 1111, implique une modification de la position angulaire de la première tige 1101 et de la deuxième tige 1102. Ainsi, le bras articulé 110 peut passer alternativement d'une position rétractée à une position au moins en partie déployée.

Pour cela, et comme illustré dans les figures 3 et 4, la première couronne 1110 comprend un pourtour extérieur 1110a, sur lequel est montée la portion proximale 1101c de la première tige 1101 de chaque bras articulé 110, de préférence par son extrémité proximale 1101d. Chaque première tige 1101 des bras articulés 110 étant montée sur la première couronne 1110, l'on comprend que, dans un module de prise d'appui 11, les mouvements de chaque première tige 1101 des bras articulés 110 sont simultanés. Le pourtour extérieur 1110a peut plus particulièrement comprendre une articulation, et plus particulièrement un pivot de liaison 1110b, permettant de solidariser cette extrémité proximale 1101d par rapport à la première couronne 1110, tout en permettant la rotation de la portion proximale 1101c de la première tige 1101 autour d'un axe parallèle à l'axe longitudinal x du premier bâti 10.

En outre, et comme illustré dans les figures 3 et 4, la deuxième couronne 1111 peut comprendre un pourtour extérieur 1111a, sur lequel est montée la portion proximale 1102c de la deuxième tige 1102, de préférence par son extrémité proximale 1102d. Chaque deuxième tige 1102 des bras articulés 110 étant montée sur la deuxième couronne 1111, l'on comprend que, dans un module de prise d'appui 11, les mouvements de chaque deuxième tige 1102 des bras articulés 110 sont simultanés. Le pourtour extérieur 1111a peut comprendre plus particulièrement comprendre une articulation, et plus particulièrement un pivot de liaison 1111b, permettant de solidariser cette extrémité proximale 1102d par rapport à la deuxième couronne 1111, tout en permettant la rotation de la portion proximale 1102c de la deuxième tige 1102 autour d'un axe parallèle à l'axe longitudinal x du premier bâti 10.

Par ailleurs, les pourtours extérieurs 1110a, 1111a de la première couronne 1110 et de la deuxième couronne 1111 peuvent être juxtaposés et alignés selon l'axe longitudinal du premier bâti 10.

Le module de prise d'appui 11 peut comprendre deux platines 114 entre lesquelles le mécanisme d'entraînement 111 est monté. Les deux platines 114 peuvent être disposées de part et d'autre de l'ensemble formé par la première couronne 1110 et la deuxième couronne 1111, comme illustré en figure 3.

Afin de maintenir les deux platines 114 et l'ensemble formé par la première couronne 1110 et la deuxième couronne 1111, le module de prise d'appui peut comprendre au moins un élément d'assemblage 113. De préférence, une pluralité d'éléments d'assemblage peut être disposée autour des pourtours extérieurs 1110a, 1111a de la première couronne 1110 et de la deuxième couronne 1111. Chacun des éléments d'assemblage 113 peut être fixé à chaque platine 114 par un élément de fixation 1130. Ainsi pour chaque élément d'assemblage 113, deux éléments de fixation 1130 peuvent être disposés en vis-à-vis selon une direction parallèle l'axe longitudinal du premier bâti 10. Chaque élément de fixation 1130 peut comprendre une ouverture 1130a, radiale à la première couronne 1110 et à la deuxième couronne 1111. Un panneau 1131 peut être inséré dans l'ouverture 1130a des deux éléments de fixation 1130 disposés en vis-à-vis, de sorte que le panneau 1131 est transversal aux pourtours extérieurs 1110a, 1111a de la première couronne 1110 et de la deuxième couronne 1111.

Le panneau 1131 peut en outre être configuré pour ne pas être directement en contact avec la première couronne 1110 et la deuxième couronne 1111. Pour cela, le bord longitudinal proximal du panneau 1131 peut comprendre un évidemment. En alternative, un roulement à bille peut être disposé entre le panneau 1131 et l'ensemble formé par la première couronne 1110 et la deuxième couronne 1111. Ainsi, la rotation de la première couronne 1110 et la deuxième couronne 1111 autour de l'axe longitudinal x du premier bâti 10, induit peu, voire pas, de frottement sur le panneau 1131. Le maintien des deux platines 114 et de l'ensemble formé par la première couronne 1110 et la deuxième couronne 1111 peut être assuré y compris lors du fonctionnement du mécanisme d'entraînement 111.

Avantageusement, l'assemblage réalisé par la première couronne 1110 et la deuxième couronne 1111et les platines 114 peut définir un volume intérieur étanche à l'eau au sein duquel les mobilités des engrenages se produit. On notera que les bras articulés 110 sont uniquement montés sur la première couronne 1110 et la deuxième couronne 1111 par l'extérieur, évitant toute difficulté d'étanchéité à ce niveau. De façon alternative ou complémentaire, l'assemblage réalisé par le bloc moteur 112 sur une platine 114 peut définir un volume intérieur étanche à l'eau, afin d'assurer un bon fonctionnement du bloc moteur 112.

Le module de prise d'appui 11 peut en outre comprendre une pluralité de butées configurées pour stopper le mécanisme d'entraînement 111, de façon à stopper le mouvement en rotation de chaque bras articulé 110, en fin de course de chaque bras articulé 110, lors du passage de la configuration d'engagement à la configuration de dégagement. Ainsi, la butée permet d'éviter la rotation de l'au moins une partie de chaque bras articulé au-delà de la fin de cours, c'est-à-dire lorsque chaque bras articulé est dans une position rétractée. Le risque d'endommager les bras articulés en les actionnant au-delà de leur position rétractée est ainsi limité, voire évité. Par exemple, l'élément d'assemblage 113 peut en outre jouer le rôle de butée.

Pour cela, une pluralité de butées peut être disposée autour des pourtours extérieurs 1110a, 1111a de la première couronne 1110 et de la deuxième couronne 1111. Par exemple, et comme illustré dans les figures 3 et 4, trois butées 113 peuvent être disposées de façon à stopper la rotation de la première couronne 1110 et de la deuxième couronne 1111 en mettant en butée les pivots de liaison 1110b, 1111b reliant les trois bras articulés 110, lorsque chaque bras articulé 110 est dans sa position rétractée. Pour cela, chacune des butées 113 peut être fixée à chaque platine 114 par un élément de fixation 1130. Ainsi pour chaque butée 113, deux éléments de fixation 1130 peuvent être disposés en vis-à-vis selon une direction parallèle l'axe longitudinal du premier bâti. Chaque élément de fixation 1130 peut comprendre une ouverture 1130a, radiale à la première couronne 1110 et à la deuxième couronne 1111. Un panneau 1131 peut être inséré dans l'ouverture 1130a des deux éléments de fixation 1130 disposés en vis-à-vis, de sorte que le panneau 1131 est transversal aux pourtours extérieurs 1110a, 1111a de la première couronne 1110 et de la deuxième couronne 1111. Ainsi, selon l'exemple illustré en figure 3, les pivots de liaison 1110b, 1111b reliant les trois bras articulés 110, peuvent être mis en butée sur le panneau 1131, lorsque chaque bras articulé 110 est dans sa position rétractée.

Pour que la première couronne 1110 et la deuxième couronne 1111 soient entrainées en rotation et induisent le mouvement des bras articulés 110, la première couronne 1110 et la deuxième couronne peuvent chacune comprendre un pourtour intérieur 1110c, 1111c. Comme illustré en figure 5, ce pourtour intérieur 1110c, 1111c peut présenter des dents, de façon à pouvoir être entrainé en rotation autour de l'axe longitudinal du premier bâti 10, lors d'une rotation de l'arbre de transmission 1120 du bloc moteur 112. Le mécanisme d'entraînement peut comprendre en outre un réducteur mécanique 1112, permettant de coupler l'arbre de transmission 1120 et chacun des pourtours intérieurs 1110c, 1111c de la première couronne 1110 et de la deuxième couronne 1111. Ce réducteur mécanique 1112 peut plus particulièrement être configuré pour entraîner la rotation de la première couronne 1110 et la rotation de la deuxième couronne 1111 selon des sens de rotation opposés.

Pour cela, l'arbre de transmission 1120 est solidaire d'un pignon 1121 présentant un diamètre externe D1, comme illustré en figure 6. Ainsi, l'arbre de transmission 1120 entraine le pignon 1121 en rotation selon l'axe longitudinal du premier bâti 10. Par exemple, lors du passage de la configuration de dégagement à la configuration d'engagement, le pignon central 1121 est entrainé en rotation par l'arbre de transmission 1120, selon le premier sens S1, comme illustré en figure 5.

Le réducteur mécanique 1112 peut comprendre un premier engrenage 1112a, dont le diamètre externe D2 est supérieur au diamètre externe D1 du pignon 1121, et coopérant avec le pignon 1121, comme illustré en figure 6. Le premier engrenage peut en outre coopérer avec le pourtour intérieur 1110c de la première couronne 1110. Par exemple, lors du passage de la configuration de dégagement à la configuration d'engagement, le premier engrenage 1112a est entrainé en rotation autour d'un axe parallèle à l'axe longitudinal du premier bâti 10, selon le premier sens S1. La première couronne 1110 est alors entrainée en rotation selon le premier sens S1, permettant le déploiement des bras articulés 110, comme illustré en figure 5. De préférence, le réducteur mécanique 1112 comprend une première paire d'engrenages 1112a, disposés de part et d'autre du pignon 1121 dans un plan perpendiculaire à l'axe longitudinal x du premier bâti 10. L'utilisation d'une première paire d'engrenage 1112a permet notamment d'améliorer la solidité du mécanisme d'entraînement 111 en assurant un bon alignement entre l'arbre de transmission 1120 et la première couronne 1110.

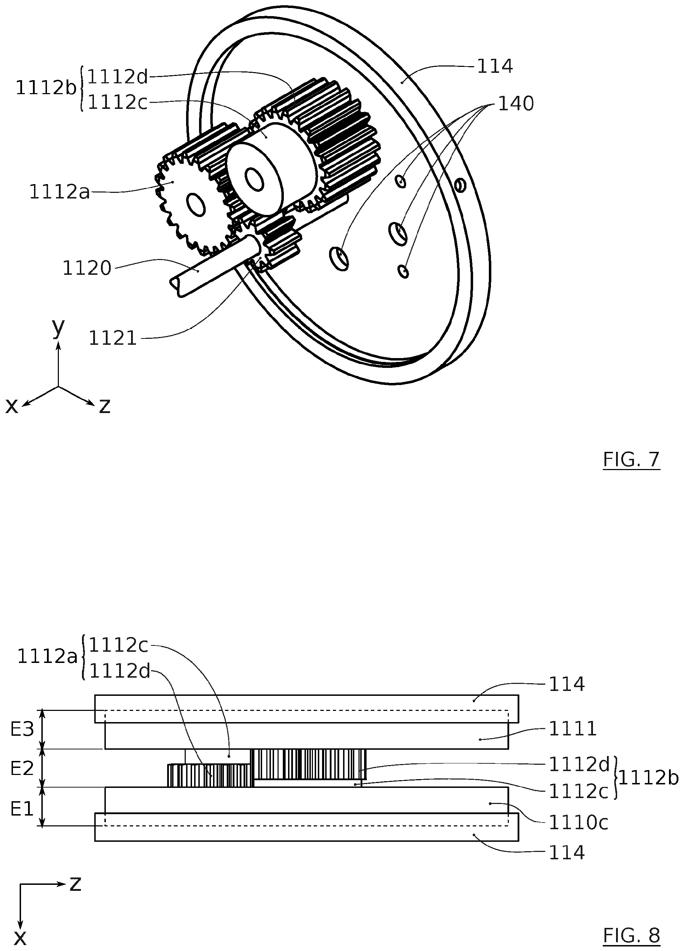

Le réducteur mécanique 1112 peut comprendre un deuxième engrenage 1112b, coopérant avec le premier engrenage 1112a sans coopérer avec le pignon 1121, comme illustré par les figures 6 et 7. Par exemple, lors du passage de la configuration de dégagement à la configuration d'engagement, le premier engrenage 1112a étant entrainé en rotation autour d'un axe parallèle à l'axe longitudinal du premier bâti 10, selon le sens S1, le deuxième engrenage 1112b peut être entrainé en rotation autour d'un axe parallèle à l'axe longitudinal du premier bâti 10, selon le deuxième sens S2. Le deuxième engrenage 1112b coopère en outre avec le pourtour intérieur 1111c de la deuxième couronne 1111, induisant ainsi sa rotation autour de l'axe longitudinal x du premier bâti 10, selon le deuxième sens S2, comme illustré en figure 5.

Par ailleurs, le diamètre externe D3 du deuxième engrenage 1112b peut être sensiblement égal au diamètre externe D2 du premier engrenage 1112a, comme illustré en figure 6. Le diamètre du pourtour intérieur 1110c de la première couronne 1110 peut être sensiblement égal au diamètre du pourtour intérieur 1111c de la deuxième couronne 1111. Ainsi, les mouvements en rotation de la première tige 1101 et de la deuxième tige 1102 de chaque bras articulé 110 sont synchronisés.

Comme illustré par les figures 7 et 8, l'arbre de transmission 1120, le premier engrenage 1112a et le deuxième engrenage 1112b peuvent s'étendre entre les deux platines 114 du module de prise d'appui 11, chacun selon une direction parallèle à l'axe longitudinal x du premier bâti 10. L'arbre de transmission 1120, le premier engrenage 1112a et le deuxième engrenage 1112b peuvent être montées en s'insérant dans des ouvertures 140 sur chacune des platines 140. Le premier engrenage 1112a et le deuxième engrenage 1112b peuvent chacun comprendre une portion lisse 1112c et une portion dentée 1112d.

Comme illustré plus particulièrement en figure 8, trois espaces E1, E2, et E3 peuvent être décrits, ces espaces étant perpendiculaires à l'axe longitudinal x du premier bâti 10. Un premier espace E1 peut comprendre le pourtour intérieur 1110c de la première couronne 1110, une partie de la portion dentée 1112d du premier engrenage 1112a, au moins une partie de la portion lisse 1112c du deuxième engrenage 1112b, ainsi que le pignon 1121, de façon à permettre l'entraînement en rotation de la première couronne 1110 selon l'un parmi le premier sens S1 et le deuxième sens S2, sans entraîner en rotation la deuxième couronne 1111 dans le même sens.

Un deuxième espace E2 peut comprendre une partie de la portion dentée 1112d du premier engrenage 1112a et une partie de la portion dentée 1112d du deuxième engrenage 1112b. Ainsi, une rotation du premier engrenage 1112a selon l'un parmi le premier sens S1 et le deuxième sens S2, peut entraîner une rotation le deuxième engrenage 1112b selon l'autre parmi le premier sens S1 et le deuxième sens S2. Un troisième espace E3 peut comprendre le pourtour intérieur 1111c de la deuxième couronne 1111, une partie de la portion dentée 1112d du deuxième engrenage 1112b, au moins une partie de la portion lisse 1112c du premier engrenage 1112a, de façon à permettre l'entraînement en rotation de la deuxième couronne 1111 selon l'autre parmi le premier sens S1 et le deuxième sens S2.

Le module de prise d'appui 11 peut en outre comprendre un dispositif de mesure configuré pour mesurer l'amplitude du mouvement des bras articulés 110, lors du passage alternativement de la configuration d'engagement à la configuration de dégagement. Lorsque l'amplitude du mouvement des bras articulés 110 est mesurée lors du passage de la configuration de dégagement à la configuration de d'engagement, l'amplitude pouvant être mesurée lors du passage de la configuration d'engagement à la configuration de dégagement, le robot peut être configuré pour arrêter le bloc moteur 112 lorsque les bras articulés 1130 sont dans leur position rétractée. Dès lors, on comprend qu'il n'est pas nécessaire d'avoir recours à une butée. Par exemple, le bloc moteur 112 peut comprendre une roue codeuse 1123, comme illustré en figure 3, et configurée pour coopérer avec le moteur 1122 ou le motoréducteur 1122. Le moteur 1122 ou le motoréducteur 1122 est pour cela de préférence un moteur ou un motoréducteur pas à pas.

Chaque module de prise d'appui peut en outre être équipé de capteurs de distance, non représenté sur les dessins. Ces capteurs de distance peuvent plus particulièrement être configurés pour mesurer la distance entre le premier bâti 10 et la paroi 20 du conduit 2. Ainsi, ces capteurs permettent à la machine de connaitre sa position dans le conduit 2. À partir de cette position, il est possible de déterminer l'amplitude de mouvement des bras articulés 1130 permettant de passer le module d'appui 11 dans sa configuration d'engagement de la portion d'appui 1100. Cette amplitude pouvant être mesurée par la roue codeuse 1123, le robot 1 peut être configuré pour arrêter le bloc moteur 112 lorsque les bras articulés 130 sont déployés sur cette amplitude.

En outre, les bras articulés 110 peuvent comprendre un dispositif de détection de mise en butée, non représenté sur les dessins. Plus particulièrement, la portion d'appui 1100 d'au moins un bras articulé 110 de chaque module de prise d'appui 11 peut être doté de ce dispositif de détection de mise en butée, de façon à détecter la mise en appui de la portion d'appui 1100 sur la paroi 20 du conduit 2. Pour cela, le dispositif de détection de mise en butée peut comprendre une bille en acier, applicable sur la paroi 20, solidaire d'un ressort interne. Le ressort interne est de préférence disposé selon la direction principale de déploiement de l'au moins un bras articulé 110. La mise en appui de la portion d'appui 1100 peut déclencher un mouvement de la bille par compression du ressort. Ce mouvement peut être mesuré par un capteur. Cette mesure peut être ensuite transmise à un système de commande, par exemple pour arrêter le bloc moteur 112 lors du passage d'une configuration de dégagement à une configuration d'engagement.

Selon un exemple, au moins un, et de préférence chacun des bras articulés 110 peut comprendre un élément d'appui du bras 110 sur la paroi 20, non représenté sur les dessins. Cet élément d'appui peut plus particulièrement être disposé à l'extrémité distale des bras articulés 110, au niveau de la portion d'appui 1100. L'élément d'appui peut comprendre au moins une, et de préférence deux extensions à base d'une matière déformable au contact de la paroi 20, dans la configuration d'engagement de la portion d'appui 1100. Ainsi, la stabilisation du robot 1 par le module de prise d'appui 11 est améliorée. En outre, l'élément d'appui permet ainsi de compenser un défaut d'ovalisation de la conduite 2, comme c'est le cas typiquement pour les conduites sous les voies de circulations, soumises à d'importantes vibrations pouvant causer leur déformation, par exemple sous les routes et autoroutes. Chaque extension de l'élément d'appui peut s'étendre, à partir du pivot distal 1103, selon une direction parallèle à l'axe longitudinal x du robot 1. L'épaisseur de l'élément d'appui peut typiquement être de quelques mm, par exemple sensiblement 3 mm.

L'invention n'est pas limitée aux modes de réalisations précédemment décrits et s'étend à tous les modes de réalisation couverts par les revendications.

Par exemple, on peut prévoir que le module de prise d'appui 11 comprenne plus de trois bras articulés, par exemple quatre ou six.

### LISTE DES REFERENCES

- 1.: Robot
- 10.: Premier bâti
- 10'.: Deuxième bâti
- 100, 100'.: Ouverture
- 11.: Module de prise d'appui
- 110.: Bras articulé
- 1100.: Portion d'appui
- 1101.: Première tige
- 1101a.: Extrémité distale
- 1101b.: Portion distale
- 1101c.: Portion proximale
- 1101d.: Extrémité proximale
- 1102.: Deuxième tige
- 1102a.: Extrémité distale
- 1102b.: Portion distale
- 1102c.: Portion proximale
- 1102d.: Extrémité proximale
- 1103.: Pivot distal
- 1104.: Pivot proximal
- 1105.: Pivot intermédiaire
- 111.: Mécanisme d'entraînement
- 1110.: Première couronne
- 1110a.: Pourtour extérieur
- 1110b.: Pivot de liaison
- 1110c.: Pourtour intérieur
- 1111.: Deuxième couronne
- 1111a.: Pourtour extérieur
- 1111b.: Pivot de liaison
- 1111c.: Pourtour intérieur
- 1111b.: Pivot de liaison
- 1112.: Réducteur mécanique
- 1112a.: Premier engrenage
- D2.: Diamètre externe du premier engrenage
- 1112b.: Deuxième engrenage
- D3.: Diamètre externe du deuxième engrenage
- 1112c.: Portion lisse
- 1112d.: Portion dentée
- 112.: Bloc moteur
- 1120.: Arbre de transmission
- 1121.: Pignon
- D1.: Diamètre externe du pignon
- 1122.: Moteur ou motoréducteur
- 1123.: Roue codeuse
- 113.: Élément d'assemblage
- 1130.: Élément de fixation
- 1130a.: Ouverture
- 1131.: Panneau
- 114.: Platine de maintien
- 1140.: Trou
- 12.: Système de positionnement
- 2.: Conduit
- 20.: Paroi
- E1.: Premier espace
- E2.: Deuxième espace
- E3.: Troisième espace

## Revendications

1. Robot (1) d'exploration de conduit (2) comprenant un premier bâti (10) et un deuxième bâti (10'), le premier bâti (10) et le deuxième bâti (10') comprennent chacun un module de prise d'appui (11) doté de plusieurs bras articulés (110), chaque bras articulé (110) comprenant une portion d'appui (1100) applicable sur une paroi (20) du conduit (2), la portion d'appui (1100) étant déplaçable par un mouvement d'un bras articulé (110), chaque module de prise d'appui (11) est configuré pour passer alternativement d'une configuration d'engagement de la portion d'appui (1100), à une configuration de dégagement de la portion d'appui (1100), chaque bras articulé (110) étant plus déployé dans ladite configuration d'engagement que dans ladite configuration de dégagement,
chaque module de prise d'appui (11) est en outre configuré de sorte que les bras articulés (110) sont disposés dans un plan perpendiculaire à un axe longitudinal (x) d'au moins l'un parmi le premier bâti (10) et le deuxième bâti (10'), et de sorte que les bras articulés (110) sont au moins en partie mobiles entre ladite configuration d'engagement et ladite configuration de dégagement, selon un mouvement de rotation, sur au moins un secteur angulaire, autour d'un axe parallèle à l'axe longitudinal (x) de l'au moins l'un parmi le premier bâti (10) et le deuxième bâti (10'), chaque bras articulé (110) comprend une première tige (1101) et une deuxième tige (1102), la première tige (1101) étant configurée de façon à être articulée en rotation avec la deuxième tige (1102), selon une direction parallèle à l'axe longitudinal de l'au moins l'un parmi le premier bâti (10) et le deuxième bâti (10'), par au moins un pivot distal (1103) et un pivot proximal (1104), le robot étant **caractérisé en ce que** la première tige (1101) et la deuxième tige (1102) comprennent chacune une portion distale (1101b, 1102b) et une portion proximale (1101c, 1102c), la portion distale (1101b, 1102b) et la portion proximale (1101c, 1102c) étant articulées en rotation par un pivot intermédiaire (1105), selon une direction parallèle à l'axe longitudinal de l'au moins l'un parmi le premier bâti (10) et le deuxième bâti (10'), le pivot intermédiaire (1105) étant situé entre le pivot distal (1103) et le pivot proximal (1104), le long de chacune des première tige (1101) et deuxième tige (1102).

2. Robot (1) selon la revendication précédente, dans lequel, une extrémité distale (1101a) de la première tige (1101) est articulée avec une extrémité distale (1102a) de la deuxième tige (1102) par le pivot distal (1103), l'extrémité distale (1101a) de la première tige (1101) et l'extrémité distale (1102a) de la deuxième tige (1102) formant la portion d'appui (1200) de chaque bras articulé (110).

3. Robot (1) selon l'une quelconque des revendications précédentes, dans lequel le module de prise d'appui (11) comprend un mécanisme d'entraînement (111) et un bloc moteur (112), le mécanisme d'entraînement (111) étant configuré de façon à être entrainé par le bloc moteur (112), et induire le mouvement en rotation d'au moins une partie de chaque bras articulé (110) lors du passage alternativement de ladite configuration d'engagement à ladite configuration de dégagement.

4. Robot (1) selon la revendication précédente, dans lequel le mécanisme d'entraînement (111) comprend une première couronne (1110), la première tige (1101) de chaque bras articulé (110) étant montée sur la première couronne (1110) de façon à être libre en rotation, sur au moins un secteur angulaire, relativement à la première couronne, autour d'un axe parallèle audit axe longitudinal (x), la première couronne (1110) étant en outre configurée de façon à être entraînée en rotation, dans un premier sens de rotation (S1), lors du passage de ladite configuration de dégagement à ladite configuration de d'engagement, et dans un deuxième sens (S2), lors du passage de ladite configuration de d'engagement à ladite configuration de dégagement, le deuxième sens de rotation (S2) étant opposé au premier sens de rotation (S1).

5. Robot (1) selon la revendication précédente, dans lequel le mécanisme d'entraînement (111) comprend en outre un réducteur (1112) mécanique, configuré au moins de façon à induire une rotation de la première couronne (1110).

6. Robot (1) selon la revendication précédente, dans lequel le bloc moteur (112) comprend un pignon (1121), et le réducteur (1112) comprend un premier engrenage (1112a) coopérant d'une part avec le pignon (1121) de façon à être entrainé en rotation selon un axe de rotation parallèle à l'axe longitudinal du pignon (1121), et d'autre part avec la première couronne (1110).

7. Robot (1) selon l'une quelconque des revendications 4 à 6, dans lequel le mécanisme d'entraînement (111) comprend une deuxième couronne (1111), la deuxième tige (1102) étant montée sur la deuxième couronne (1111) de façon à être libre en rotation, sur au moins un secteur angulaire, relativement à la deuxième couronne (1111), autour d'un axe parallèle à l'axe longitudinal de l'au moins un parmi le premier bâti (10) et le deuxième bâti (10'), la deuxième couronne (1111) étant configurée de façon à être entraînée dans le deuxième sens de rotation (S2), lors du passage de ladite configuration de dégagement à ladite configuration de d'engagement, et dans le premier sens (S1), lors du passage de ladite configuration d'engagement à ladite configuration de dégagement.

8. Robot (1) selon la revendication précédente, dans lequel, le mécanisme d'entraînement (111) comprenant un réducteur (1112) mécanique, le réducteur (1112) comprenant un premier engrenage (1112a) coopérant d'une part avec le pignon (1121), de façon à être entrainé en rotation selon un axe de rotation parallèle à l'axe longitudinal du pignon (1121), et d'autre part avec la première couronne (1110), le réducteur (1112) comprend en outre un deuxième engrenage (1112b) coopérant d'une part avec le premier engrenage (1112a), de façon à être entrainé en rotation selon un axe de rotation parallèle à l'axe longitudinal du pignon (1121), et d'autre part avec la deuxième couronne (1111).

9. Robot (1) selon l'une quelconque des revendications 3 à 8, dans lequel le module de prise d'appui (11) comprend au moins un élément d'assemblage (113) configuré pour maintenir le mécanisme d'entraînement (111) assemblé.

10. Robot (1) selon la revendication précédente, dans lequel, le mécanisme d'entraînement (111) comprenant une première couronne (1110) et une deuxième couronne (1111), la première couronne (1110) et la deuxième couronne (1111) étant disposées entre une première platine (114) et une deuxième platine (114), l'au moins un élément d'assemblage (113) est monté sur la première platine (114) et la deuxième platine (114) de façon à maintenir le mécanisme d'entraînement (111) assemblé.

11. Robot (1) selon la revendication précédente, dans lequel, l'au moins un élément d'assemblage (113) comprend un premier élément de fixation (1130) monté sur la première platine (114), un deuxième élément de fixation (1130) monté sur la deuxième platine (114), et un panneau (1131) monté sur le premier élément de fixation (1130) et le deuxième élément de fixation (1130), le panneau (1131) étant configuré pour ne pas être directement en contact avec la première couronne (1110) et la deuxième couronne (1111).

12. Robot (1) selon l'une quelconque des revendications 3 à 11, dans lequel le bloc moteur (112) comprend un moteur (1122) pas à pas ou un motoréducteur (1122) pas à pas, et une roue codeuse (1123), la roue codeuse (1123) coopérant avec le moteur (1122) pas à pas ou le motoréducteur (1122) pas à pas, de façon à mesurer un degré de déploiement des bras articulés (110), lors du passage alternativement de la configuration de dégagement de la portion d'appui (1100) à la configuration de d'engagement de la portion d'appui (1100).

13. Robot selon l'une quelconque des revendications précédentes, dans lequel chaque pivot distal et proximal (1103, 1104) forme une articulation joignant la première tige (1101) et la deuxième tige (1102) que chaque pivot distal et proximal (1103, 1104) articule en rotation.

## Patentansprüche

1. Explorationsroboter (1) für Rohre (2), umfassend ein erstes Gehäuse (10) und ein zweites Gehäuse (10'), wobei das erste Gehäuse (10) und das zweite Gehäuse (10') jeweils ein Lagermodul (11) umfassen, das mit mehreren Gelenkarmen (110) versehen ist, wobei jeder Gelenkarm (110) einen Lagerabschnitt (1100) umfasst, der an einer Wand (20) des Rohrs (2) angebracht werden kann, wobei der Lagerabschnitt (1100) durch eine Bewegung eines Gelenkarms (110) verschiebbar ist, wobei jedes Lagermodul (11) dazu konfiguriert ist, abwechselnd von einer Eingriffskonfiguration des Lagerabschnitts (1100) in eine Freigabekonfiguration des Lagerabschnitts (1100) überzugehen, wobei jeder Gelenkarm (110) in der Eingriffskonfiguration weiter entfaltet wird als in der Freigabekonfiguration,
wobei jedes Lagermodul (11) ferner derart konfiguriert, dass die Gelenkarme (110) in einer Ebene senkrecht zu einer Längsachse (x) von mindestens einem des ersten Gehäuses (10) und des zweiten Gehäuses (10') angeordnet sind, und derart, dass die Gelenkarme (110) über eine Drehbewegung über mindestens einen Winkelsektor um eine Achse, die parallel zur Längsachse (x) von mindestens einem des ersten Gehäuses (10) und des zweiten Gehäuses (10') liegt, mindestens teilweise zwischen der Eingriffskonfiguration und der Freigabekonfiguration beweglich sind, wobei jeder Gelenkarm (110) eine erste Stange (1101) und eine zweite Stange (1102) umfasst, wobei die erste Stange (1101) derart konfiguriert ist, dass sie durch mindestens einen distalen Drehzapfen (1103) und einen proximalen Drehzapfen (1104) gelenkig mit der zweiten Stange (1102) in einer Richtung parallel zur Längsachse von mindestens einem des ersten Gehäuses (10) und des zweiten Gehäuses (10') drehverbunden ist,
wobei der Roboter **dadurch gekennzeichnet ist,**
**dass** die erste Stange (1101) und die zweite Stange (1102) jeweils einen distalen Abschnitt (1101b, 1102b) und einen proximalen Abschnitt (1101c, 1102c) umfassen, wobei der distale Abschnitt (1101b, 1102b) und der proximale Abschnitt (1101c, 1102c) durch einen mittleren Drehzapfen (1105) gelenkig in einer Richtung parallel zur Längsachse von mindestens einem des ersten Gehäuses (10) und des zweiten Gehäuses (10`) drehverbunden sind, wobei der mittlere Drehzapfen (1105) sich zwischen dem distalen Drehzapfen (1103) und dem proximalen Drehzapfen (1104) jeweils entlang der ersten Stange (1101) und der zweiten Stange (1102) befindet.

2. Roboter (1) nach dem vorhergehenden Anspruch, wobei ein distales Ende (1101a) der ersten Stange (1101) durch den distalen Drehzapfen (1103) gelenkig mit einem distalen Ende (1102a) der zweiten Stange (1102) verbunden ist, wobei das distale Ende (1101a) der ersten Stange (1101) und das distale Ende (1102a) der zweiten Stange (1102) den Lagerabschnitt (1200) jedes Gelenkarms (110) bilden.

3. Roboter (1) nach einem der vorhergehenden Ansprüche, wobei das Lagermodul (11) einen Antriebsmechanismus (111) und einen Motorblock (112) umfasst, wobei der Antriebsmechanismus (111) derart konfiguriert ist, dass er durch den Motorblock (112) angetrieben wird und beim abwechselnden Übergehen von der Eingriffskonfiguration in die Freigabekonfiguration die Drehbewegung mindestens eines Teils jedes Gelenkarms (110) induziert.

4. Roboter (1) nach dem vorhergehenden Anspruch, wobei der Antriebsmechanismus (111) ein erstes Hohlrad (1110) umfasst, wobei die erste Stange (1101) jedes Gelenkarms (110) derart auf dem ersten Hohlrad (1110) montiert wird, dass sie sich um mindestens einen Winkelsektor relativ zum ersten Hohlrad frei um eine Achse parallel zur Längsachse (x) drehen kann, wobei das erste Hohlrad (1110) ferner derart konfiguriert ist, dass es beim Übergehen von der Freigabekonfiguration in die Eingriffskonfiguration in der ersten Drehrichtung (S1) und beim Übergehen von der Eingriffskonfiguration in die Freigabekonfiguration in der zweiten Richtung (S2) angetrieben wird, wobei die zweite Drehrichtung (S2) der ersten Drehrichtung (S1) entgegengesetzt ist.

5. Roboter (1) nach dem vorhergehenden Anspruch, wobei der Antriebsmechanismus (111) ferner ein mechanisches Untersetzungsgetriebe (1112) umfasst, das mindestens derart konfiguriert ist, dass es eine Drehung des ersten Hohlrads (1110) induziert.

6. Roboter (1) nach dem vorhergehenden Anspruch, wobei der Motorblock (112) ein Ritzel (1121) umfasst und das Untersetzungsgetriebe (1112) ein erstes Zahnrad (1112a) umfasst, das einerseits mit dem Ritzel (1121) zusammenwirkt, um um eine Drehachse parallel zur Längsachse des Ritzels (1121) drehangetrieben zu werden, und andererseits mit dem ersten Hohlrad (1110).

7. Roboter (1) nach einem der Ansprüche 4 bis 6, wobei der Antriebsmechanismus (111) ein zweites Hohlrad (1111) umfasst, wobei die zweite Stange (1102) derart auf dem zweiten Hohlrad (1111) montiert ist, dass sie sich um mindestens einen Winkelsektor relativ zum zweiten Hohlrad (1111) frei um eine Achse parallel zur Längsachse von mindestens einem des ersten Gehäuses (10) und des zweiten Gehäuses (10`) drehen kann, wobei das zweite Hohlrad (1111) derart konfiguriert ist, dass es beim Übergehen von der Freigabekonfiguration in die Eingriffskonfiguration in der zweiten Drehrichtung (S2) und beim Übergehen von der Eingriffskonfiguration in die Freigabekonfiguration in der ersten Richtung (S1) angetrieben wird.

8. Roboter (1) nach dem vorhergehenden Anspruch, wobei der Antriebsmechanismus (111) ein mechanisches Untersetzungsgetriebe (1112) umfasst, wobei das Untersetzungsgetriebe (1112) ein erstes Zahnrad (1112a) umfasst, das einerseits derart mit dem Ritzel (1121) zusammenwirkt, dass es um eine Drehachse parallel zur Längsachse des Ritzels (1121) drehangetrieben wird, und andererseits mit dem ersten Hohlrad (1110), wobei das Untersetzungsgetriebe (1112) ferner ein zweites Zahnrad (1112b) umfasst, das einerseits derart mit dem ersten Zahnrad (1112a) zusammenwirkt, dass es um eine Drehachse parallel zur Längsachse des Ritzels (1121) drehangetrieben wird, und andererseits mit dem zweiten Hohlrad (1111).

9. Roboter (1) nach einem der Ansprüche 3 bis 8, wobei das Lagermodul (11) mindestens ein Montageelement (113) umfasst, das dazu konfiguriert ist, den Antriebsmechanismus (111) zusammenzuhalten.

10. Roboter (1) nach dem vorhergehenden Anspruch, wobei der Antriebsmechanismus (111) ein erstes Hohlrad (1110) und ein zweites Hohlrad (1111) umfasst, wobei das erste Hohlrad (1110) und das zweite Hohlrad (1111) zwischen einer ersten Grundplatte (114) und einer zweiten Grundplatte (114) angeordnet sind, wobei das mindestens eine Montageelement (113) auf der ersten Grundplatte (114) und der zweiten Grundplatte (114) derart montiert ist, dass es den Antriebsmechanismus (111) zusammenhält.

11. Roboter (1) nach dem vorhergehenden Anspruch, wobei das mindestens eine Montageelement (113) ein erstes Befestigungselement (1130), das auf der ersten Grundplatte (114) montiert ist, ein zweites Befestigungselement (1130), das auf der zweiten Grundplatte (114) montiert ist, und eine Platte (1131) umfasst, die auf dem ersten Befestigungselement (1130) und dem zweiten Befestigungselement (1130) montiert ist, wobei die Platte (1131) so konfiguriert ist, dass sie nicht in direktem Kontakt mit dem ersten Hohlrad (1110) und dem zweiten Zahnkranz (1111) steht.

12. Roboter (1) nach einem der Ansprüche 3 bis 11, wobei der Motorblock (112) einen Schrittmotor (1122) oder einen Getriebeschrittmotor (1122) und ein Codierrad (1123) umfasst, wobei das Codierrad (1123) mit dem Schrittmotor (1122) oder dem Getriebeschrittmotor (1122) zusammenwirkt, um beim abwechselnden Übergehen von der Freigabekonfiguration des Lagerabschnitts (1100) in die Eingriffskonfiguration des Lagerabschnitts (1100) einen Grad der Entfaltung der Gelenkarme (110) zu messen.

13. Roboter nach einem der vorhergehenden Ansprüche, wobei jeder distale und proximale Drehzapfen (1103, 1104) eine Gelenkverbindung bildet, die die erste Stange (1101) und die zweite Stange (1102) zusammenfügt, wobei jeder distale und proximale Drehzapfen (1103, 1104) miteinander drehverbunden ist.

## Claims

1. A robot (1) for exploring a pipe (2) comprising a first frame (10) and a second frame (10'), the first frame (10) and the second frame (10') each comprising a bearing module (11) provided with several hinged arms (110), each hinged arm (110) comprising a bearing portion (1100) applicable to a wall (20) of the pipe (2), the bearing portion (1100) being displaceable by a movement of a hinged arm (110), each bearing module (11) is configured to alternately switch from a configuration of engagement of the bearing portion (1100) to a configuration of disengagement of the bearing portion (1100), each hinged arm (110) being more deployed in said engagement configuration than in said disengagement configuration,
each bearing module (11) is further configured such that the hinged arms (110) are disposed in a plane perpendicular to a longitudinal axis (x) of at least one of the first frame (10) and the second frame (10'), and such that the hinged arms (110) are at least partially movable between said engagement configuration and said disengagement configuration, according to a rotational movement, on at least one angular sector, about an axis parallel to the longitudinal axis (x) of at least one of the first frame (10) and the second frame (10'), each hinged arm (110) comprises a first rod (1101) and a second rod (1102), the first rod (1101) being configured so as to be hinged in rotation with the second rod (1102), in a direction parallel to the longitudinal axis of the at least one of the first frame (10) and the second frame (10') by at least one distal pivot (1103) and one proximal pivot (1104), the robot being **characterised in that** the first rod (1101) and the second rod (1102) each comprise a distal portion (1101b, 1102b) and a proximal portion (1101c, 1102c), the distal portion (1101b, 1102b) and the proximal portion (1101c, 1102c) being hinged in rotation by an intermediate pivot (1105), in a direction parallel to the longitudinal axis of the at least one of the first frame (10) and the second frame (10'), the intermediate pivot (1105) being located between the distal pivot (1103) and the proximal pivot (1104), along each of the first rod (1101) and second rod (1102).

2. The robot (1) according to the preceding claim, wherein a distal end (1101a) of the first rod (1101) is hinged with a distal end (1102a) of the second rod (1102) by the distal pivot (1103), the distal end (1101a) of the first rod (1101) and the distal end (1102a) of the second rod (1102) forming the bearing portion (1200) of each hinged arm (110) .

3. The robot (1) according to any one of the preceding claims, wherein the bearing module (11) comprises a drive mechanism (111) and a motor unit (112), the drive mechanism (111) being configured so as to be driven by the motor unit (112), and to induce the rotational movement of at least one portion of each hinged arm (110) when alternately switching from said engagement configuration to said disengagement configuration.

4. The robot (1) according to the preceding claim, wherein the drive mechanism (111) comprises a first ring gear (1110), the first rod (1101) of each hinged arm (110) being mounted on the first ring gear (1110) so as to be free to rotate, on at least one angular sector, relative to the first ring gear, about an axis parallel to said longitudinal axis (x), the first ring gear (1110) being further configured so as to be driven in rotation, in a first direction of rotation (S1), when switching from said disengagement configuration to said engagement configuration, and in a second direction (S2), when switching from said engagement configuration to said disengagement configuration, the second direction of rotation (S2) being opposite to the first direction of rotation (S1).

5. The robot (1) according to the preceding claim, wherein the drive mechanism (111) further comprises a mechanical reducer (1112), configured at least so as to induce a rotation of the first ring gear (1110).

6. The robot (1) according to the preceding claim, wherein the motor unit (112) comprises a pinion (1121), and the reducer (1112) comprises a first gear (1112a) cooperating, on the one hand, with the pinion (1121) so as to be driven in rotation along an axis of rotation parallel to the longitudinal axis of the pinion (1121) and, on the other hand, with the first ring gear (1110).

7. The robot (1) according to any one of claims 4 to 6, wherein the drive mechanism (111) comprises a second ring gear (1111), the second rod (1102) being mounted on the second ring gear (1111) so as to be free to rotate, on at least one angular sector, relative to the second ring gear (1111), about an axis parallel to the longitudinal axis of the at least one of the first frame (10) and the second frame (10'), the second ring gear (1111) being configured so as to be driven in the second direction of rotation (S2), when switching from said disengagement configuration to said engagement configuration, and in the first direction (S1), when switching from said engagement configuration to said disengagement configuration.

8. The robot (1) according to the preceding claim, wherein, the drive mechanism (111) comprising a mechanical reducer (1112), the reducer (1112) comprising a first gear (1112a) cooperating, on the one hand, with the pinion (1121), so as to be driven in rotation along an axis of rotation parallel to the longitudinal axis of the pinion (1121) and, on the other hand, with the first ring gear (1110), the reducer (1112) further comprises a second gear (1112b) cooperating, on the one hand, with the first gear (1112a), so as to be driven in rotation along an axis of rotation parallel to the longitudinal axis of the pinion (1121) and, on the other hand, with the second ring gear (1111).

9. The robot (1) according to any one of claims 3 to 8, wherein the bearing module (11) comprises at least one assembly element (113) configured to maintain the drive mechanism (111) assembled.

10. The robot (1) according to the preceding claim, wherein, the drive mechanism (111) comprising a first ring gear (1110) and a second ring gear (1111), the first ring gear (1110) and the second ring gear (1111) being disposed between a first plate (114) and a second plate (114), the at least one assembly element (113) is mounted on the first plate (114) and the second plate (114) so as to maintain the drive mechanism (111) assembled.

11. The robot (1) according to the preceding claim, wherein the at least one assembly element (113) comprises a first fastening element (1130) mounted on the first plate (114), a second fastening element (1130) mounted on the second plate (114), and a panel (1131) mounted on the first fastening element (1130) and the second fastening element (1130), the panel (1131) being configured so as not to be in direct contact with the first ring gear (1110) and the second ring gear (1111).

12. The robot (1) according to any one of claims 3 to 11, wherein the motor unit (112) comprises a stepper motor (1122) or a stepper geared motor (1122), and an encoder wheel (1123), the encoder wheel (1123) cooperating with the stepper motor (1122) or the stepper geared motor (1122), so as to measure a degree of deployment of the hinged arms (110), when alternately switching from the disengagement configuration of the bearing portion (1100) to the engagement configuration of the bearing portion (1100) .

13. The robot according to any one of the preceding claims, wherein each distal and proximal pivot (1103, 1104) forms a hinge joining the first rod (1101) and the second rod (1102) which each distal and proximal pivot (1103, 1104) hinges in rotation.
